# EUROPEAN PATENT APPLICATION

(11) **EP 3 301 427 A1**
(43) Date of publication of application: **04.04.2018**
(21) Application number: 17194454.9
(22) Date of filing: 02.10.2017
(51) Int. Cl.: G01L 25/00, G01L 1/14, G01L 3/10

(54) **OFFSET COMPENSATION**

(30) Priority: 30.09.2016 EP 16191799
(71) Applicant: Torque and More (TAM) GmbH, 82319 Starnberg (DE)
(72) Inventor: MAY, Lutz, 82319 Starnberg (DE)
(74) Representative: LKGLOBAL Lorenz & Kopf PartG mbB Patentanwälte

(57) **Abstract**

A force measurement device (10) comprises a first magnetic field generating unit (160) configured to generate a magnetic field for being applied to a test object (5); a first magnetic field sensing unit (170) configured to sense the generated magnetic field; a second magnetic field sensing unit (172) configured to sense the generated magnetic field; and a control unit for driving the first magnetic field generating unit (160) with an alternating current. The first magnetic field sensing unit is configured to constitute a first resonance circuit having a first resonance frequency. The second magnetic field sensing unit is configured to constitute a second resonance circuit having a second resonance frequency. The first resonance frequency differs from the second resonance frequency. The first magnetic field generating unit (160) comprises a generator coil which is configured to be driven by an alternating current as to generate the magnetic field. The control unit is configured to subtract a measurement value of the first magnetic field sensing unit from a measurement value of the second magnetic field sensing unit in order to determine an output value indicative for the measured force. The control unit is configured to adapt a frequency of the alternating current for driving the magnetic field generating unit such that the output value equals a predetermined value in an unloaded case.

## Description

### Technical Field

The present invention relates to force measurement and in particular to a sensor device for sensing a torque being applied to an object.

### Background of the Invention

Force measuring is important for many industrial applications, in particular for arrangements being dynamically impacted by a force. Applied forces may be pressure forces or loads as well as moments like torque and bending impact. An exemplary application for torque is a shaft for a vehicle being arranged between a motor and e.g. a wheel.

For determining a torque in the shaft, typically either a particular element needs to be mounted to the shaft, or the shaft needs to be pre-processed, e.g. magnetized. Mounting elements to a shaft may influence the movement of the shaft, pre-processing may be difficult when the shaft is not accessible or cannot me dismounted for pre-processing.

Alternatively, devices which do not require preprocessing of the shaft may be used for measuring a force applied to an object (also referred to as test object). Such devices comprise a magnetic field generating device and a magnetic field sensing device. The magnetic field generating device generates a magnetic field the magnetic flux lines of which are influenced by the object. If a load or a force is applied to the respective object, the influence of the object to the magnetic flux lines will alter compared to the unloaded condition of the object. The magnetic field sensing device is used to detect the magnetic field. The forces applied to the object can be determined based on the magnetic flux lines of the detected magnetic field.

### Summary of the Invention

One of the attractive features of the non-contact and magnetic principle based sensing technology is that the sensing device can be approached from one side to the surface of the test object from which the measurements have to be taken. But when trying to take mechanical force measurements from one side only (with a single point sensing device), then changing the distance between the sensing device and the surface of the test object will have an influencing factor of the achievable measurement performance. Typically, the shorter the distance between the sensing device and the surface of the test object, the better the measurement signal quality will be, for example the higher the amplitude of a measurement signal might be. In other words, it has been recognized that the distance between the test object and either one or both of the sensing device and the generating device has an influence on the signal detected by the sensing device. Therefore, the signal strength, which may be an indicator for the applied force, may unintentionally vary and thus lead to an adulterated measurement value.

It may thus be seen as an object of the present invention to provide a magnetic principle based mechanical force sensing technology which allows a better calibration process.

This object is solved by the subject matter of the independent claims, further embodiments are incorporated in the dependent claims and in the following description.

According to a first aspect, a force measurement device is provided. The force measurement device may preferably be used for measuring a force applied to a test object, for example a torque force, a bending force, or an axial load. The force measurement device comprises a first magnetic field generating unit configured to generate a magnetic field for being applied to a test object; a first magnetic field sensing unit configured to sense the generated magnetic field; a second magnetic field sensing unit configured to sense the generated magnetic field; and a control unit for driving the first magnetic field generating unit with an alternating current. The first magnetic field sensing unit is configured to constitute a first resonance circuit having a first resonance frequency. The second magnetic field sensing unit is configured to constitute a second resonance circuit having a second resonance frequency. The first resonance frequency differs from the second resonance frequency. The first magnetic field generating unit comprises a generator coil which is configured to be driven by an alternating current as to generate the magnetic field. The control unit is configured to subtract a measurement value of the first magnetic field sensing unit from a measurement value of the second magnetic field sensing unit in order to determine an output value indicative for the measured force. The control unit is configured to adapt a frequency of the alternating current for driving the magnetic field generating unit such that the output value equals a predetermined value in an unloaded case.

In other words, the control unit comprises a frequency generator that supplies an internal operating frequency and this internal operating frequency is adapted so that the differential signal between the first and second magnetic field sensing units (output signal, measurement value, output value) is kept constant at a predetermined value in case no force is applied. Thus, a desired output value for starting a measuring process can be achieved and it is not necessary to amplify the differential signal. Merely amplifying the differential signal may also amplify any interference or carrier signals. In contrast thereto, it is proposed herein to adapt or adjust the internal operating frequency of the control unit so that the differential signal is set to a desired value. The control unit is configured to improve a calibration process of the force measurement device. After placing the force measurement device close to the test object (optionally, the force measurement device may be positionally fixed so that it does not change its relative position with respect to the test object), the control unit may measure the output signal and may adapt the IOF such that the output signal is adjusted as to correspond to a desired value; this may be done so that the output value successively approaches the desired or predetermined value, i.e., in a stepwise manner. These calibration steps are carried out with no force being applied to the test object.

When building or realising individual and correctly tuned resonance circuits inside the Sensing Element (i.e., the first and second magnetic field sensing units of the force measurement device) then by changing the Internal Operating Frequency (IOF) of the magnetic field generating unit, the zero-force (zero-Torque or zero-Bending) offset value can be adjusted to the desired value without changing the sensitivity of the Sensing Element (i.e., the force measurement device). This allows to make changes to the zero-Torque offset-signal without changing signal gain at the same time and further allows to compensate for changes in the zero-Torque offset-signal when having to deal with mechanical tolerances of the sensing module fixture when placing the sensing module (i.e., an arrangement with the Sensing Element inside) onto the Test-Object.

The following improve the understanding of the described approach: Without the here described design solution, the zero-offset value can be adjusted only by attenuating (changing the amplification) the incoming (receiving) signal from the sensing inductors (LS). By doing so, not only the zero-offset value will be adjusted but also the signal gain (sensitivity) of the Sensing Element. This has several unwanted consequences that otherwise will lead to a more complex sensor electronics. Furthermore, when placing the Sensing Module (with the Sensing Element inside) nearest to the Test-Object, it may be important that the rotational orientation of the Sensing Element (in relation to the Test-Object) is aligned to a fraction of a degree. Any rotational (or other type of) misalignment between the Sensing Element and the centre axis of the Test-Object (shaft) may result in a change in the balance between the first and second magnetic field sensing units. The consequence will be that the zero-offset value will change.

For example, the desired zero-Torque output signal (differential signal between the first and second magnetic field sensing units) will be +2.5 Volt (assuming that the available output signal range is from 0 (zero) Volt to +5 Volt). When measuring Torque (or Bending) forces directionally, then the analogue output signal can change in both direction (towards +5 Volt for positive Torque forces and towards 0 Volt for negative Torque forces). A purposefully or accidental change of the offset of the Sensor output signal can be in either direction: to a Voltage higher than +2.5 Volt or to Voltage lower than +2.5 Volt.

When using a signal amplification circuit (inside the Signal Conditioning Electronic; most often in the first circuit stage) to correct the signal offset (e.g., from 2.7 Volt to 2.5 Volt) then, unfortunately the signal gain will be changed as well. One of the disliked consequences of this offset correction method is that the sensor calibration values become invalid (and have to be redone: re-calibration) when making changes to the settings of the first signal amplification circuit.

According to an embodiment, the first magnetic field sensing unit comprises a first coil and a first electric capacity (C_{SA}), wherein the first coil and the first electric capacity are connected as to constitute the first resonance circuit.

According to an embodiment, the first coil and the first electric capacity are connected in parallel to each other.

According to an embodiment, the first magnetic field sensing unit comprises a second coil, and the second coil is connected in series to the first coil and wherein the first electric capacity is connected in parallel to the first coil and the second coil.

According to an embodiment, the second magnetic field sensing unit comprises a third coil and a second electric capacity (C_{SB}) connected to each other such that the second resonance circuit is constituted.

According to an embodiment, the first coil has a first number of windings and the third coil has a third number of windings, and the first number of windings is greater than the third number of windings.

According to an embodiment, a first capacitance of the first electric capacity is greater than a second capacitance of the second electric capacity.

According to an embodiment, a first capacitance of the first electric capacity is less than a second capacitance of the second electric capacity.

According to an embodiment, a frequency of the alternating current is greater than the first resonance frequency and less than the second resonance frequency.

According to an embodiment, the absolute value of a difference between the first resonance frequency and the frequency of the alternating current is equal to the absolute value of a difference between the second resonance frequency and the frequency of the alternating current.

According to an embodiment, a difference between the first resonance frequency and the second resonance frequency is between 5% and 12% of the frequency of the alternating current.

According to an embodiment, the force measurement device further comprises a flux concentrator having a first pole, a second pole and a third pole, wherein the first magnetic field generating unit is arranged at the first pole, wherein the first magnetic field sensing unit is arranged at the second pole, and wherein the second magnetic field sensing unit is arranged at the third pole.

According to an embodiment, the first magnetic field sensing unit comprises a coil which is wound around the first pole, wherein the first magnetic field sensing unit comprises a first coil wound around the second pole, wherein the second magnetic field sensing unit comprises a third coil wound around the third pole.

According to an embodiment, the flux concentrator has a fourth pole and a fifth pole, wherein the first magnetic field sensing unit comprises a second coil which is wound around the fourth pole and wherein the second pole and the fourth pole are arranged opposite with the first pole being arranged in between.

The here described force measurement device may apply to a mechanical force sensor design with the following characteristics: The received carrier signal (coming from the first and second magnetic field sensing units) will be manipulated (modified or modulated) by the mechanical stresses that are applied to the Test-Object. Such mechanical forces can be Torque, Bending, or Axial Load, for example. The applied method of measurement signal decoding is amplitude demodulation. The flux concentrator of the Sensing Element has either three poles or five poles, for example. The IOF (Internal Operating Frequency) can be changed freely (is programmable). The analogue ground signal ("zero"-signal) is ½ Vcc (+2.5 Volt) as the Sensor Electronic is powered by single +5 Volt (Vcc) supply.

### Brief description of the drawings

In the following for further illustration and to provide a better understanding of the present invention exemplary embodiments are described in more detail with reference to the enclosed drawings, in which
- Fig. 1: shows a flux concentrator for a force measurement device according to the description,
- Fig. 2: shows a force measurement device according to the description,
- Fig. 3: shows a force measurement device according to the description,
- Fig. 4: shows a force measurement device according to the description,
- Fig. 5: shows configurations of a force measurement device according to the description,
- Fig. 6: shows a force measurement device according to the description,
- Fig. 7: shows configurations of a force measurement device according to the description,
- Fig. 8: shows a schematic overview of a force measurement device according to the description,
- Fig. 9: shows a schematic measurement signal,
- Fig. 10: shows an example of an output signal of a force measurement device,
- Fig. 11: shows a schematic representation of a force measurement device,
- Fig. 12: shows a schematic representation of a force measurement device,
- Fig. 13: shows a schematic representation of a force measurement device,
- Fig. 14: shows a schematic representation of a force measurement device,
- Fig. 15: shows a schematic representation of a force measurement device,
- Fig. 16: shows a schematic representation of a force measurement device,
- Fig. 17: shows a schematic representation of signal values measured at the components of the force measurement device,
- Fig. 18: shows a schematic representation of a force measurement device,
- Fig. 19: shows a schematic representation of signal values measured at the sensing units of a force measurement device,
- Fig. 20: shows a schematic representation of signal values measured at the components of a force measurement device,
- Fig. 21: shows the effect of changing the IOF to the output value,
- Fig. 22: shows an example of an output signal,
- Fig. 23: shows an example of a force measurement device together with a test object,
- Fig. 24: shows an example of a force measurement device together with a test object.

### Detailed description of the drawings

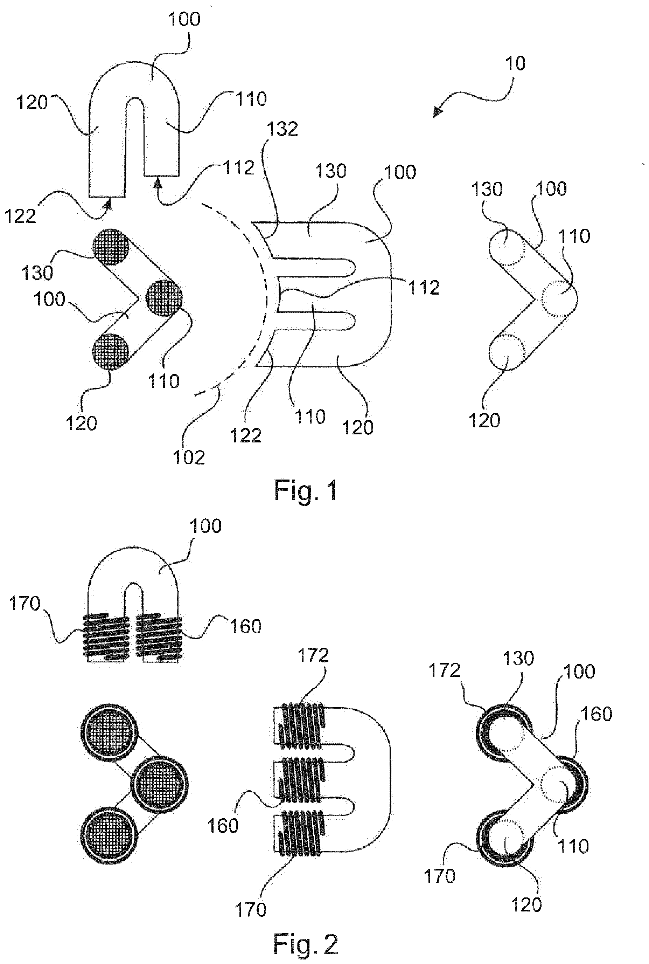

Fig. 1 shows a flux concentrator 100 for a force measurement device 10 from different perspectives. A side view is shown in the upper left corner and a bottom view is shown directly underneath the side view. The front view is shaped like an E and is shown in the lower row in the middle and the top view is shown next to it on the right.

The flux concentrator 100 comprises three poles 110, 120, 130 each of which comprises an end face 112, 122, 132, respectively. The first pole 110 is shorter than the second and third poles 120, 130. An envelope 102, which may for example be described as a tangent along the end faces or tips of the poles 110, 120, 130 is concave shaped.

In the side view, the third pole is obscured by the second pole 120. In the top view and bottom view it can be seen that the poles are arranged similar to the corners of an isosceles triangle.

In this embodiment, two independent magnetic flux measurements are compared with each other and the difference between these two measurements is used to compute (or create) the sensor output signal.

In Fig. 1, a three pole-end flux concentrator is shown, seen from different angles. The pole-ends of the flux-concentrator will face the Test-Object. Using round corners assures that there are limited to none magnetic stray fields that emanates from the flux concentrator body at the wrong places. The active measurements are taken place between the pole-ends.

Fig. 2 shows a flux concentrator 100 similar to that shown in Fig. 1, wherein in Fig. 2 the poles are shown at similar length to enable a better overview. A magnetic field generating unit 160 in the form of a coil is wound around the first pole 110. A first magnetic field sensing unit 170 in the form of a coil is wound around the second pole 120 and a second magnetic field sensing unit 172 in the form of a coil is wound around the third pole 130.

The force measurement device may particularly be a differential mode force measurement device and consists of a flux concentrator with at least three magnetic pole-ends, for example arranged in a 90 degree angle to each other. Around each pole-end are coils (inductors) wound. Most optimal sensor performances may be achieved when the inductors (coils) are placed nearest to the pole-end. This may minimize the magnetic performance losses caused by uncontrolled magnetic flux lines.

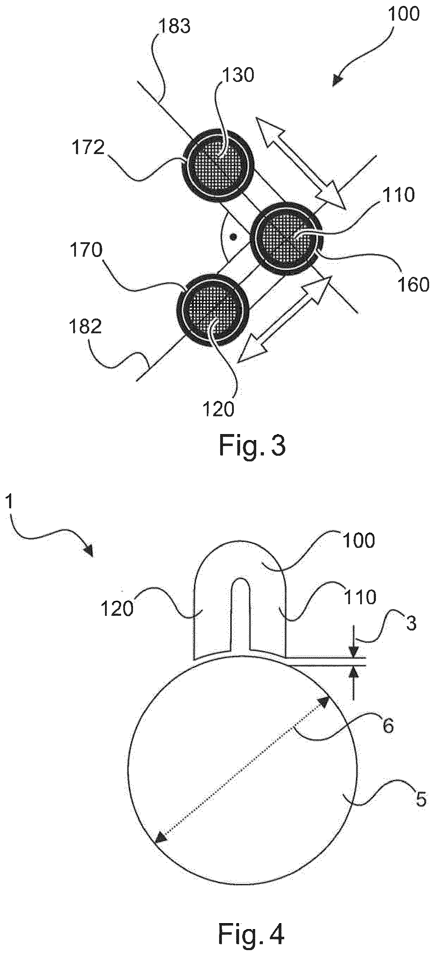

Fig. 3 shows a bottom view of a flux concentrator 100. The flux concentrator is formed like an arrowhead. A first connection line 182 extends between the first pole 110 and the second pole 120. A second connection line 183 extends between the first pole 110 and the third pole 130. The first and second connection lines 182, 183 intersect at a predetermined angle, for example 90°.

In this specific embodiment, the centre pole-end of the flux concentrator (first pole 110) is where the magnetic field generator coil is placed. The magnetic signals are then received with the inductors (coils) wound around the second and third poles 120, 130. The number of turns, the physical length of the coil, and the material chosen for the flux concentrator itself defines the inductivity of the inductors.

Fig. 4 shows a force measurement arrangement 1 with a force measurement device as described with reference to other embodiments herein. The flux concentrator 100 is arranged such that the pole ends are directed towards a test object 5, for example a shaft with a diameter 6. The flux concentrator is arranged such that the end faces of the poles are spaced apart at a virtually constant distance 3.

When placing the flux concentrator with flat-faced pole-ends against a round shaped Test-Object, then the spacing 3 or the distance between the flux concentrator and the Test-Object surface will increase at the edges of the flux concentrator. When the Test-Object is of round shape like a symmetrically shaped power dive shaft or gear-box shaft then it may be best to custom-shape the pole-ends as well. In such a case the spacing or distance will be more evenly and constant across the flux concentrator pole-ends and the surface of the Test-Object. A shorter distance between the Sensing Module and the Test-Object may increase the efficiency of the signal transfer between them both (more measurement signal and lower signal noise). Depending on the diameter 6 of the Test-Object, the 'shaping' of the pole-ends may be matched differently. Meaning that for different Test-Objects with different diameters, different and matching flux concentrators may be tooled.

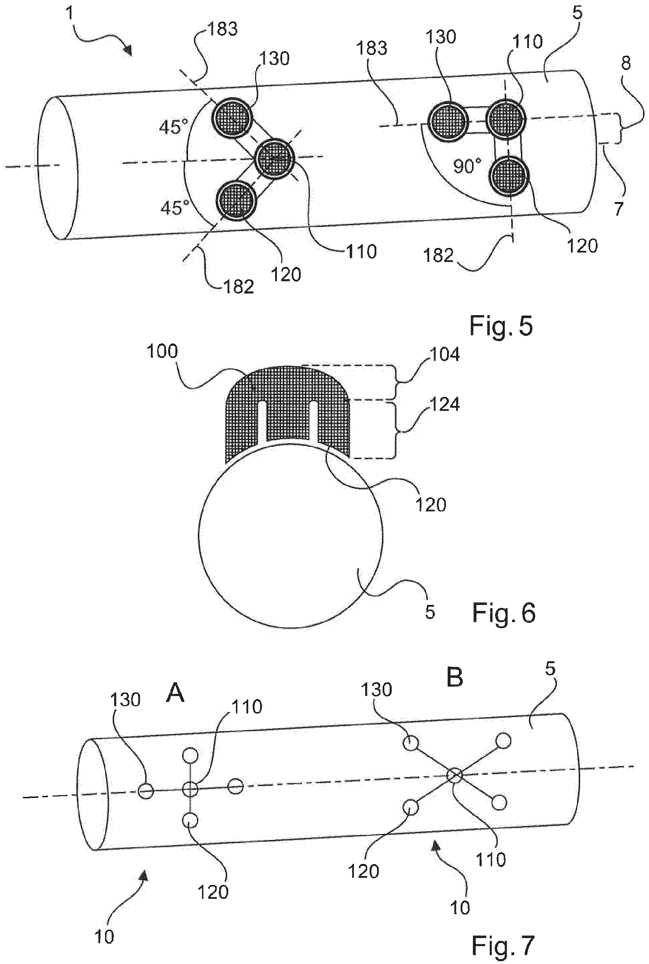

Fig 5 shows a top view of two configurations of a force measurement arrangement.

On the left, a force measurement device is arranged such that the first pole 110 is directly above the longitudinal central axis 7 of the test object 5, i.e. there is no lateral offset between the longitudinal central axis 7 and the first pole 110 or a centre of the first pole 110. Each of the first connection line 182 and second connection line 183 intersects the longitudinal central axis at an angle of 45°. The connection lines 182, 183 intersect at 90°. This arrangement may particularly be advantageous when measuring torque forces applied to the test object.

On the right, a force measurement device is arranged such that the first pole 110 is laterally offset 8 relative to the longitudinal central axis 7 of the test object 5. The first connection line 182 intersects the longitudinal central axis 7 at an angle between 85° and 95°, i.e. substantially at 90°. The second connection line 183 is substantially parallel to the longitudinal central axis 7 and may intersect with the longitudinal central axis at an angle between 1° and 5°. This arrangement may particularly be advantageous when measuring bending forces applied to the test object.

The physical (rotational) orientation of the force measurement device in relation to the central axis of the Test-Object determines what forces will be measured by the force measurement device: Torque, Bending, or a mixture of both.

Fig. 6 shows a side view of a flux concentrator 100 relative to a round test object 5. It can be seen that the envelope of the poles' tips are adapted to the outer surface of the round test object.

In this case the sensor performance can be increased by shaping the pole-end-surfaces round such that not only the envelope is concave but also the end faces of the poles.

Fig. 7 shows alternative embodiments of a force measurement device 10, namely a five pole configuration. Similar to Fig. 5 there are at least two different configurations for placing the force measurement device relative to a test object. Configuration A is specifically adapted to measure bending forces (corresponds to the right hand configuration of Fig. 5). The first pole 110 may be laterally offset (as shown in Fig. 5) or may be aligned (Fig. 7, configuration A) with the longitudinal central axis of the test object. Configuration B corresponds the left hand configuration of Fig. 5 and is adapted for measuring torque forces.

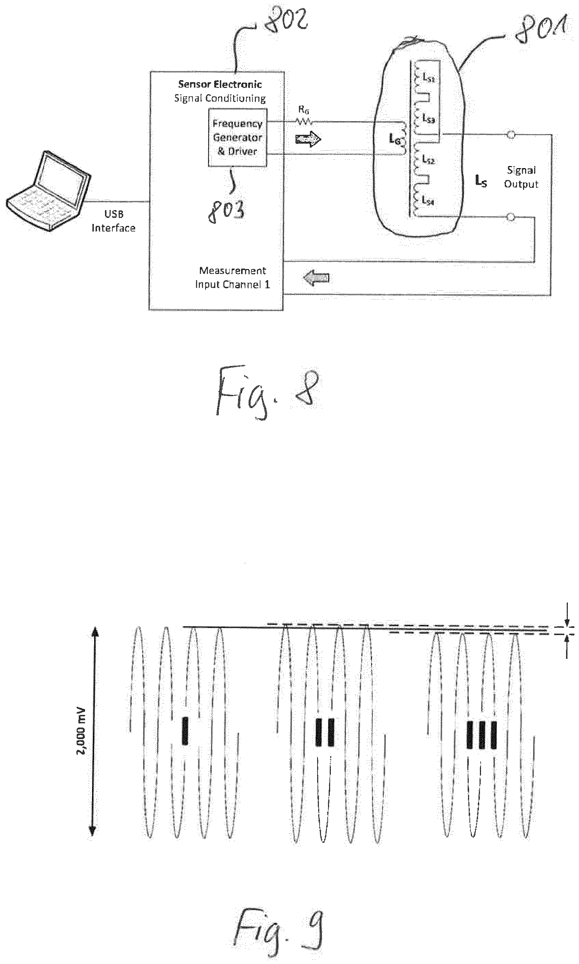

Fig. 8 shows the basic design of an active mechanical force sensor that consists of a sensing element 801 (optionally placed inside a protective sensing module housing, not shown), the sensor electronic 802 (may also be referred to as control unit), and the test object (Ferro-magnetic shaft or beam, not shown). The sensing element is connected to the sensor electronic by a number of wires (in the example below there are four wires used).

The Sensing Element is placed nearest to the Test-Object (from where Torque or Bending measurements have to be taken) and is connected to the Sensor Electronic. A signal generator and power driver circuit 803 is supplying an alternating current to the magnetic field generator coil LG. The returning signal LS (depending on the Sensing Element design coming from the 2, or as shown above from 4 Sensing Coils, LS1 to LS4,) will be modulated in the signal phase delay and the signal amplitude in relation to the mechanical forces that act on the Test-Object.

Fig. 9 shows an example of the output signal of a force measurement device. When measuring the signal amplitude from an individual sensing coil (like for example from LS1, or LS2, or any other individual sensing coil), then it will mainly consists of a carrier signal (of the same frequency as the IOF) and an around +/- 1% amplitude modulation when the corresponding mechanical forces are applied to the Test-Object. The modulation is indicated by the horizontal dashed lines.

The left curve (marked with "I") represents the received signal when no mechanical forces are applied to the Ferro-magnetic Test-Object. The curve in the middle (marked "II") is in the amplitude around 1% larger when around 100 MPa (Mega Pascal) are applied to the Ferro magnetic Test-Object. It should be understood that the here given figures are examples only and are applicable when a certain Ferro-magnetic material is used that has been hardened to 50 HRc or above. To eliminate most or all of the unmodulated carrier signal (like the 2,000 mV signal shown in the example above) and to enhance the modulated carrier signal portion (like the +/-20 mV signal shown in the example above), more than one Sensing Coil are used. The signals received by at least two Sensing Coils (like LSA and LSB, or LS 1 and LS2, for example) are then subtracted from each other (differential measurement) and the absolute value of the differential measurement is used (as an signal amplitude demodulation process is used) for the further Signal Processing.

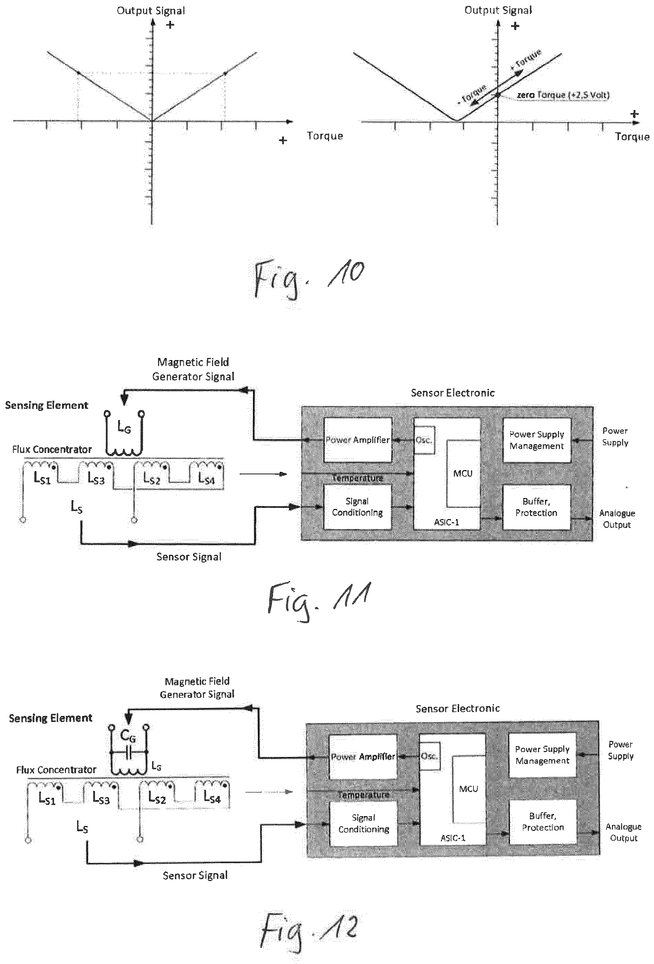

Fig. 10 shows the signal processing of Fig. 9 in more detail. Inside the Sensing Element, more than one Sensing Coils are used (either 2 or 4 inductors) and the difference are built from the two Sensing Coil groups (ABS(A - B)). Drawing at the left side: For the further signal processing activity, only the absolute values are used. The disadvantage of this type of signal amplitude demodulation process is that the computed measurement result does not reveal the polarity or direction of the applied mechanical forces (like: positive or negative Torque forces). Drawing at the right side: By slightly mistuning one Sensing Inductor (different resonance frequency, more coil windings, for example), the differential signal ABS(A - B) will not result in a "Zero" value when no torque forces are applied. Meaning that when no mechanical forces are applied to the Ferro-magnetic Test-Object) there will be a small signal (other than zero) left after the differential value has been computed. Now it will be possible to differentiate between positive and negative Torque forces.

However, it is exactly this computational procedure (building the value ABS(A - B)) that makes the sensor-signal-gain and sensor-signal-offset sensitive to changes in the initial signal amplification. Meaning that when changing the amplification of the signal received from the Sensing Element, then this will result in changes of the Zero-Torque Signal-Offset and will also change the sensitivity of the measurement device. One cannot be changed without changing the other, unfortunately. This invention is addressing this issue.

Fig. 11 shows an example of the force measurement device with details of the implementation of the control unit (sensor electronics).

Inside the sensor electronics, the functions of Signal Conditioning and Signal Processing are relaized. In addition, there is a circuit that is responsible for the creation of a controlled magnetic field (Oscillator, Power Amplifier, and Magnetic Field Generator Coil LG). An alternating signal (here referred to as the IOF for Internal Operating Frequency), of a certain frequency, is generated by the electronic circuit, is then amplified to the desired level, and is then passed-on to the magnetic field generator coil LG. The intensity and effectiveness (in relation to measuring mechanical forces) of the generated magnetic field is defined by the properties of the inductors and flux concentrator (used inside the Sensing Element), the chosen frequency of the IOF, and the amount of current with which the magnetic field generating inductor LG is driven. In order to reduce the electric current consumption of the Sensing Element, the magnetic field generator coil will be paired with a parallel capacitor to for a resonance circuit.

Such a capacitor in parallel to LG is shown in Fig. 12. By adding a parallel capacitor C_{G} to the magnetic field generator coil L_{G} a resonance circuit is formed. When driving the circuit L_{G} C_{G} with an alternating signal nearest the frequency of the resonance circuit, the electric current consumption of the magnetic field generator will be greatly reduced. For most applications a low power consumption is an important property of the Active Sensor System.

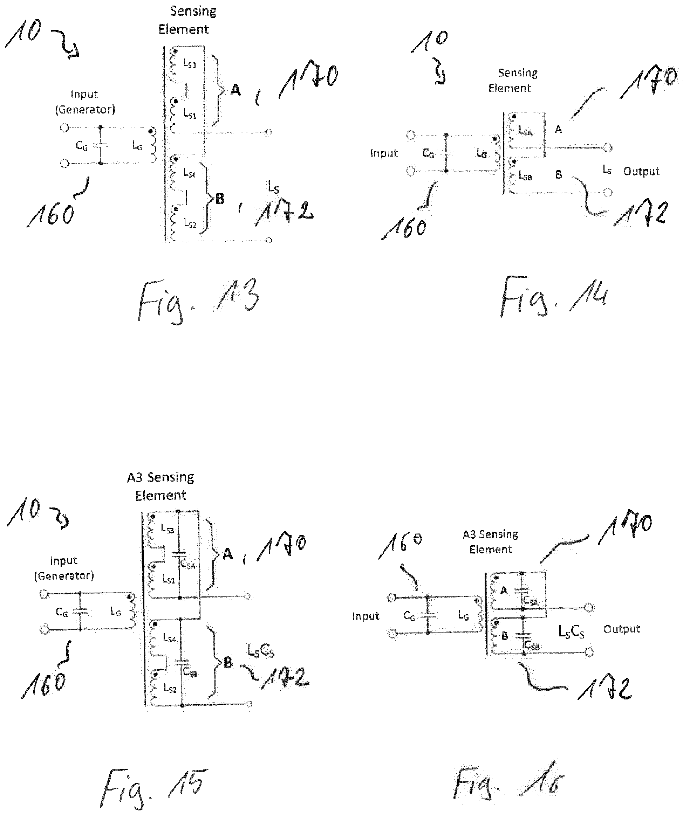

Fig. 13 shows a schematic overview of a force measurement device 10 with a first magnetic field generator unit 160, a first magnetic field sensing unit 170, and a second magnetic field sensing unit 172. To make further explanations simpler we will use in this document the terms: Sensing Coil Group "A" (or Sensing Coil A) and Sensing Coil Group B (or Sensing Coil B). The reason for connecting the coils A and B in reverse order is to delete the portion of the carrier signal that has not been modulated by mechanical forces that are applied to the Test-Object. This will also result in an enhancement of the carrier signal portion that has been modulated by the applied mechanical forces.

Fig. 14 shows a similar force measurement device as shown in Fig. 13. However, in Fig. 14, there is only one inductor per sensing coil group or magnetic field sensing unit.

In this invention each Sensing Coil group (A and B) will get its own capacitor to form a parallel resonance circuit of a specific frequency f_{A} and f_{B}. This is shown in Fig. 15 and Fig. 16.

The Sensing Element consists of a number of inductors (in total either 5 or only 3, for example) and three capacitors to form three resonance circuits. While the main purpose of the first resonance circuit (LG and CG) is to reduce the total power consumption of the Sensing Element, the other two resonance circuits (LSA CSA and LSB CSB) simplify the zero-Torque (or zero-Bending) offset adjustment process without changing the sensitivity of the Sensing Element but as a result of the adjusted IOF.

The two resonance circuits LSA CSA and LSB CSB are tuned to slightly different frequencies that are very close to each other. For example, resonance frequency for LSA CSA is set to be 6.3 kHz and resonance frequency for LSB CSB is set to 5.7 kHz.

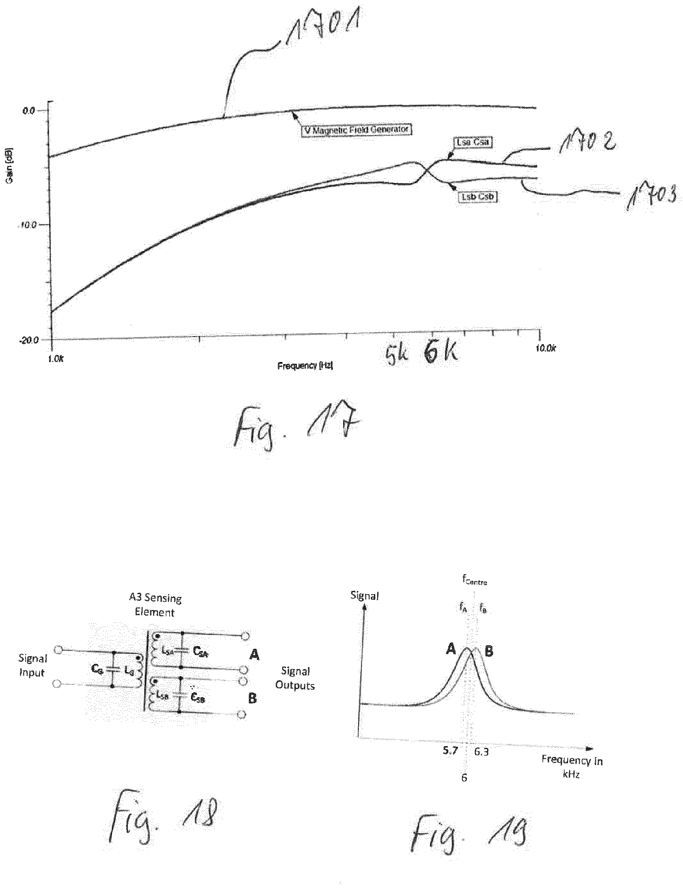

Fig. 17 shows a curve 1701 ("Volt Magnetic Field Generator") that corresponds to the signal measured across the inductor LG when applying an alternating signal with the frequency 1kHz to 10 kHz. The maximum amplitude of the generator resonance circuit LG CG is at around 5 kHz. The other two curves L_{SA} C_{SA} 1702 and L_{SB} C_{SB} 1703 represent the signal amplitudes measured across the Sensing coils A (L_{SA} C_{SA}) and B (L_{SB} C_{SB}). As the resonance frequencies for the circuit A (L_{SA} C_{SA}) and B (L_{SB} C_{SB}) are slightly different, the maximum signal amplitudes of 1702 and 1703 are at two different locations, but close to each other.

Fig. 18 shows a force measurement device similar to those already shown above.

Fig. 19 schematically shows a Bode Plot (using the inductor L_{G} as the signal input and using the individual resonance circuits A and B as signal outputs, Fig. 18). The graphs will look as shown in Fig. 19. In this specific example, the resonance circuit A (L_{SA} C_{SA}) will peak at 5.7 kHz (f_{A}) and the resonance circuit B (L_{SB} C_{SB}) will peak at 6.3 kHz (f_{B}). Meaning that the centre frequency cₑₙₜᵣₑ is 6 kHz.

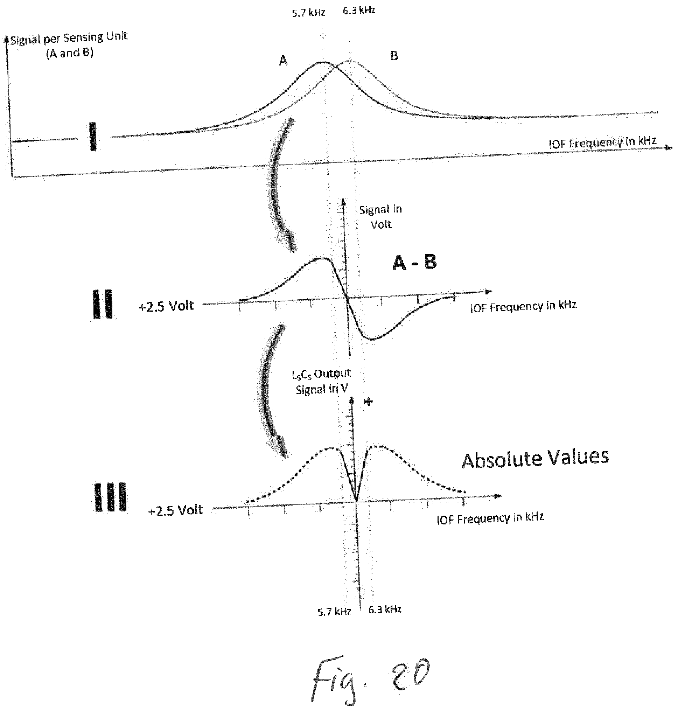

Fig. 20 shows a signal processing within the sensor electronics. The three individual graphs I, II, and III are frequency sweeps that cover also the range of the resonance frequencies of the two receiver circuits A (LSACSA) and B (LSBCSB). When subtracting the signals A and B (from the two receiver circuits A and B, marked as "I" in Fig. 20) then the results (differential signal) looks like as shown in picture "II" in Fig. 20. When using a signal amplitude demodulation process (subject of this document) then we have to take the "Absolute" value of the differential signal ABS (A - B).

In the third picture (marked "III") is a portion ("V"-shaped signal) of the resulting differential signal drawn as continuous line in the center of the graph. This "V" shaped signal portion represents the signal offset changes of the sensor electronic output when changing the IOF from 5.7 kHz to 6.3 kHz (for this specific example).

The two resonance frequencies fA and fB are relatively close to each other. For example, the absolute difference of the two resonance frequencies (fA and fB) is in the area of 10% (which is the same as +/- 5%) of the chosen centre frequency (which in our example is 6 kHz). The centre frequency can be anything within the range of below 1 kHz to something above 10 kHz.

Depending on the chosen IOF (Internal Operating Frequency) the absolute value of the differential signal of the two resonance circuits ABS(A - B) will change the "zero"-Torque sensor output offset-signal from an initial more "positive" value (when the IOF is at 5.7 kHz) to a much lower value (at 6 kHz) and then again a more "positive" value (at 6.3 kHz). Meaning, that the resulting "zero"-Torque sensor output offset-signal can be controlled (or tuned) by changing the IOF. However, this specific feature (or function) may only be practical (or advisable) when the IOF remains within the range that is defined by the two resonance frequencies fA and fB. In this specific example: within the range 5.7 kHz and 6.3 kHz. Of course, this can be any other range depending on the actual inductivities and capacities used for the resonance circuits A and B.

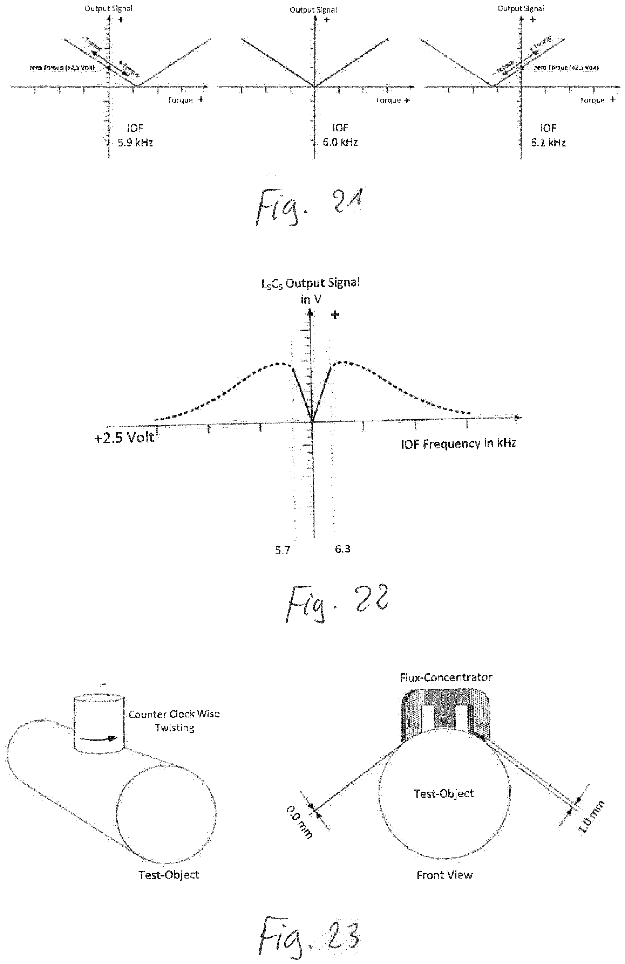

By changing the IOF (Internal Operating Frequency) within a limited range, the "zero"-Torque offset value can be changed (or tuned) without changing the signal gain, see Fig. 21. Once the zero torque offset value is set to the desired value, the force measurement device can be used to measure applied forces in two different directions while the initial value of the output signal (zero torque offset value) is set to said desired value. This approach may be referred to as calibration process and may be executed after placing the force measurement device in position to measure applied forces. Of the relative position of the force measurement device and the test object changes, the calibration process may be repeated.

The zero-Torque offset signal of the Sensor Electronic can follow the continuous line "V"-Shaped curve and can be adjusted by changing the IOF (the AC Signal that is driving the magnetic field generator resonance circuit L_{G}C_{G}), see Fig. 22.

As shown in Fig. 23, the shift (change) of the signal offset of the force measurement device may happen for several reasons: when twisting the Sensing Module or due to component tolerances when assembling the Sensing Element.

When twisting the Sensing Module even by a small amount (in this example in CCW Counter Clock Wise direction, see picture on the left) then some of the magnetic poles of the Flux Concentrator will move closer to the surface of the Test-Object while others will move away from it. This will cause a shift in the offset of the sensor signal

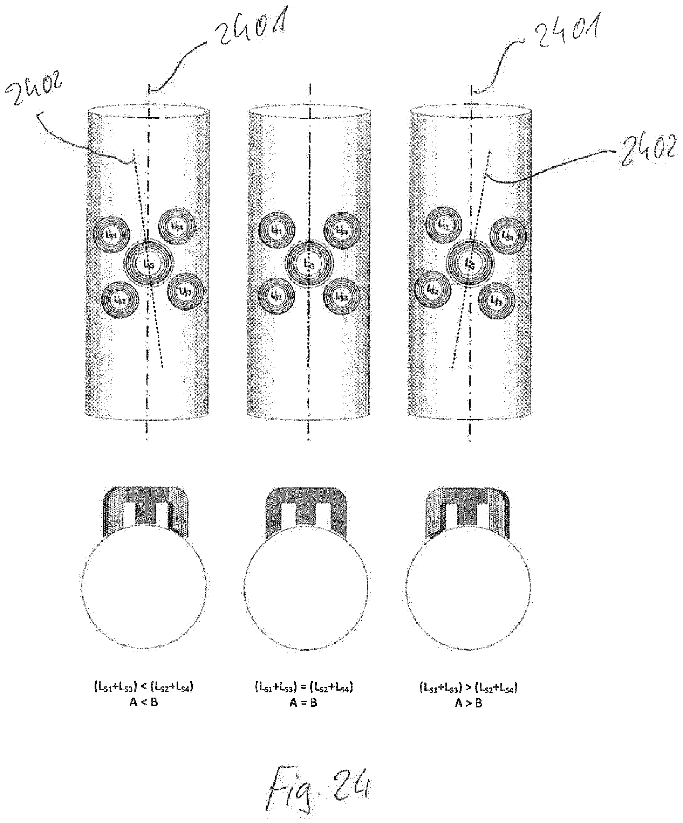

Fig. 24 shows the effect of the twist in more detail. When twisting the Sensing Element in CW or CCW direction (in relation to the main axis of the Test-Object), then the absolute measurement values of the sensing coil group A and B will change in opposite direction (when the value A is increasing the value B will decrease, and the other way around). In Fig. 24, the longitudinal axis 2401 of the test object is vertically aligned and on the left, an axis 2402 of the force measurement device is inclined in CCW direction with respect to the axis 2401. On the right, axis 2402 is inclined in CW direction with respect to axis 2401.

## Claims

1. Force measurement device (10), preferably for measuring a force applied to a test object, for example a torque force, a bending force, or an axial load, the force measurement device comprising:
a first magnetic field generating unit (160) configured to generate a magnetic field for being applied to a test object (5);
a first magnetic field sensing unit (170) configured to sense the generated magnetic field;
a second magnetic field sensing unit (172) configured to sense the generated magnetic field;
a control unit for driving the first magnetic field generating unit (160) with an alternating current;
wherein the first magnetic field sensing unit is configured to constitute a first resonance circuit having a first resonance frequency;
wherein the second magnetic field sensing unit is configured to constitute a second resonance circuit having a second resonance frequency;
wherein the first resonance frequency differs from the second resonance frequency;
wherein the first magnetic field generating unit (160) comprises a generator coil which is configured to be driven by an alternating current as to generate the magnetic field;
wherein the control unit is configured to subtract a measurement value of the first magnetic field sensing unit from a measurement value of the second magnetic field sensing unit in order to determine an output value indicative for the measured force;
wherein the control unit is configured to adapt a frequency of the alternating current for driving the magnetic field generating unit such that the output value equals a predetermined value in an unloaded case.

2. Force measurement device (10) according to claim 1,
wherein the first magnetic field sensing unit (170) comprises a first coil and a first electric capacity (C_{SA});
wherein the first coil and the first electric capacity are connected as to constitute the first resonance circuit.

3. Force measurement device (10) according to claim 2,
wherein the first coil and the first electric capacity are connected in parallel to each other.

4. Force measurement device (10) according to claim 2 or 3,
wherein the first magnetic field sensing unit (170) comprises a second coil;
wherein the second coil is connected in series to the first coil and wherein the first electric capacity is connected in parallel to the first coil and the second coil.

5. Force measurement device (10) according to any one of claims 2 to 4,
wherein the second magnetic field sensing unit (172) comprises a third coil and a second electric capacity (C_{SB}) connected to each other such that the second resonance circuit is constituted.

6. Force measurement device (10) according to claim 5,
wherein the first coil has a first number of windings and the third coil has a third number of windings;
wherein the first number of windings is greater than the third number of windings.

7. Force measurement device (10) according to claim 5 or 6,
wherein a first capacitance of the first electric capacity is greater than a second capacitance of the second electric capacity.

8. Force measurement device (10) according to claim 5 or 6,
wherein a first capacitance of the first electric capacity is less than a second capacitance of the second electric capacity.

9. Force measurement device (10) according to any one of the preceding claims,
wherein a frequency of the alternating current is greater than the first resonance frequency and less than the second resonance frequency.

10. Force measurement device (10) according to any one of the preceding claims,
wherein the absolute value of a difference between the first resonance frequency and the frequency of the alternating current is equal to the absolute value of a difference between the second resonance frequency and the frequency of the alternating current.

11. Force measurement device (10) according to claim 9 or 10,
wherein a difference between the first resonance frequency and the second resonance frequency is between 5% and 12% of the frequency of the alternating current.

12. Force measurement device (10) according to any one of the preceding claims, further comprising:
a flux concentrator (100) having a first pole (110), a second pole (120) and a third pole (130);
wherein the first magnetic field generating unit (160) is arranged at the first pole (110);
wherein the first magnetic field sensing unit (170) is arranged at the second pole (120;
wherein the second magnetic field sensing unit (172) is arranged at the third pole (130).

13. Force measurement device (10) according to claim 12,
wherein the first magnetic field sensing unit (170) comprises a coil which is wound around the first pole;
wherein the first magnetic field sensing unit comprises a first coil wound around the second pole (120);
wherein the second magnetic field sensing unit comprises a third coil wound around the third pole (130).

14. Force measurement device (10) according to claim 13,
wherein the flux concentrator (100) has a fourth pole and a fifth pole;
wherein the first magnetic field sensing unit (170) comprises a second coil which is wound around the fourth pole and wherein the second pole and the fourth pole are arranged opposite with the first pole being arranged in between.
